# EUROPÄISCHE PATENTANMELDUNG

(11) **EP 1 816 222 A1**
(43) Veröffentlichungstag der Anmeldung: **08.08.2007**
(21) Anmeldenummer: 06001256.4
(22) Anmeldetag: 20.01.2006
(51) Int. Cl.: C22C 19/00, C23C 28/00, B32B 15/00

(54) **Schichtsystem mit zweilagiger metallischer Anbindungsschicht**

(71) Anmelder: SIEMENS AKTIENGESELLSCHAFT, 80333 München (DE)
(72) Erfinder: Ahmad, Fathi, 41564 Kaarst (DE); Pan, Ying, Dr., 45219 Essen (DE)

(57) **Zusammenfassung**

Metallische Anbindungsschichten weisen einen Übergang vom duktilen zum spröden Verhalten auf.

Das erfindungsgemäße Schichtsystem (1) besteht aus einer zweilagigen metallischen Anbindungsschicht (7, 8, 9), wobei die jeweiligen Schichten (7, 8) verschiedene Temperaturen DBTT für den Übergang vom spröden zum duktilen mechanischen Verhalten aufweisen.

## Beschreibung

Die Erfindung betrifft ein Schichtsystem gemäß Anspruch 1.

Schichtsysteme bestehen beispielsweise aus einer äußeren keramischen Schicht, einer einzigen metallischen Anbindungsschicht darunter und einem metallischen Substrat und werden bei hohen Temperaturen, insbesondere bei Gasturbinenschaufeln, eingesetzt.
Die metallische Anbindungsschicht (bond coat) dient zur Anpassung der unterschiedlichen Ausdehnungskoeffizienten von metallischem Substrat und keramischer Wärmedämmschicht und als Korrosionsschutzschicht.
Jedoch weist auch die Anbindungsschicht oft Nachteile auf, nämlich hat sie einen so genannten Übergang vom Sprödverhalten zum duktilen Verhalten der mechanischen Eigenschaften bei steigender Temperatur und weist eine materialtypische DBTT-Temperatur auf, bei der der Übergang stattfindet.
Dies stellt einen Nachteil dar, wenn Temperaturschwankungen oder Temperaturabsenkungen während des Einsatzes des Schichtsystems mit der Schicht erfolgen und die Einsatztemperatur des Schichtsystems unter die Temperatur DBTT sinkt bei der Schicht spröde ist und diese dann im spröderen Zustand mechanisch belastet wird.

Es ist daher Aufgabe der Erfindung ein Schichtsystem einer Anbindungsschicht aufzuzeigen, die oben genannten Nachteil überwindet.

Die Aufgabe wird gelöst durch ein Schichtsystem gemäß Anspruch 1.

In den Unteransprüchen sind weitere vorteilhafte Maßnahmen aufgelistet.

Die in den Unteransprüchen aufgelisteten Maßnahmen können beliebig in vorteilhafter Art und Weise miteinander kombiniert werden.

Die US 5,401,307 beschreibt eine metallische Anbindungsschicht, die einen DBTT-Übergang mit einer Temperatur DBTT aufweist. Die Beschreibung dieses Übergangs und der Temperatur DBTT ist Teil der Offenbarung.

Die Erfindung wird anhand der Zeichnungen näher erläutert.
- Figur 1: zeigt ein erfindungsgemäßes Schichtsystem,
- Figur 2: zeigt beispielhafte Änderungen der Temperaturverhältnisse im Vergleich zu den charakteristischen DBTT der einzelnen Schichten,
- Figur 3: zeigt eine Gasturbine,
- Figur 4: zeigt perspektivisch eine Turbinenschaufel,
- Figur 5: zeigt perspektivisch eine Brennkammer.

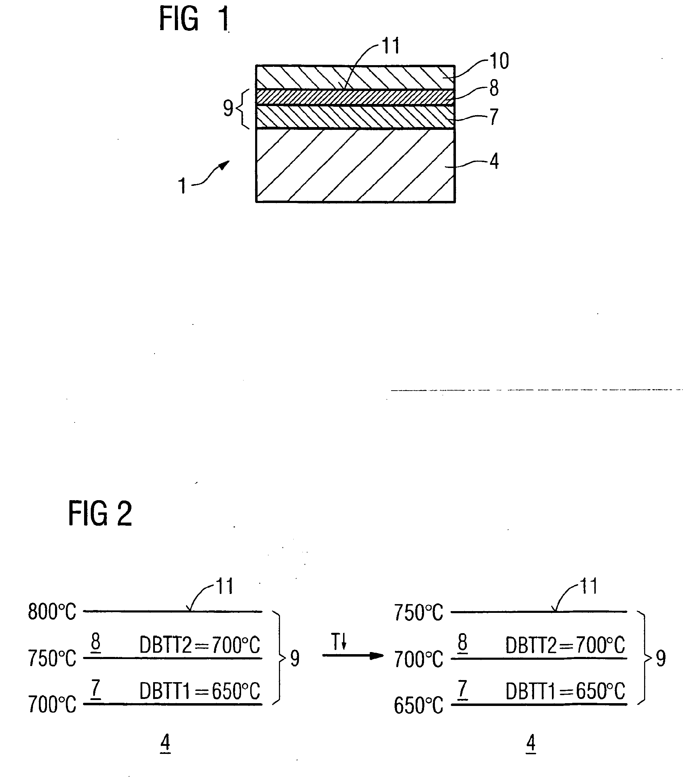

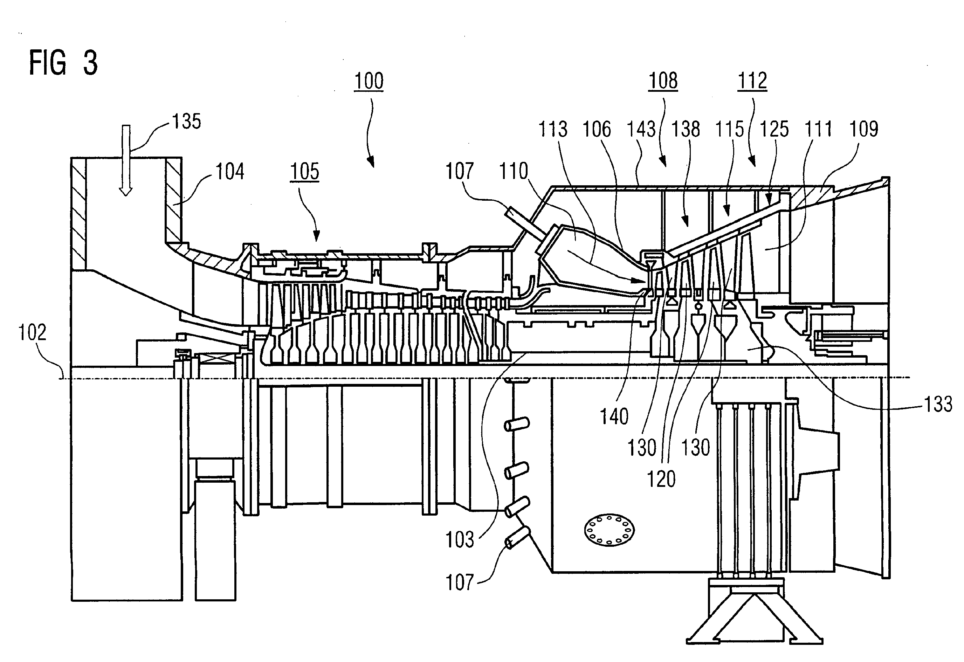

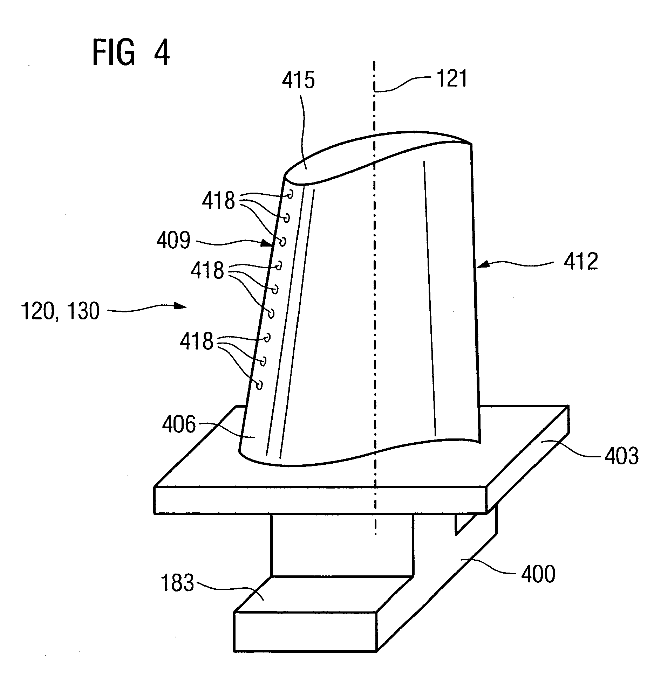

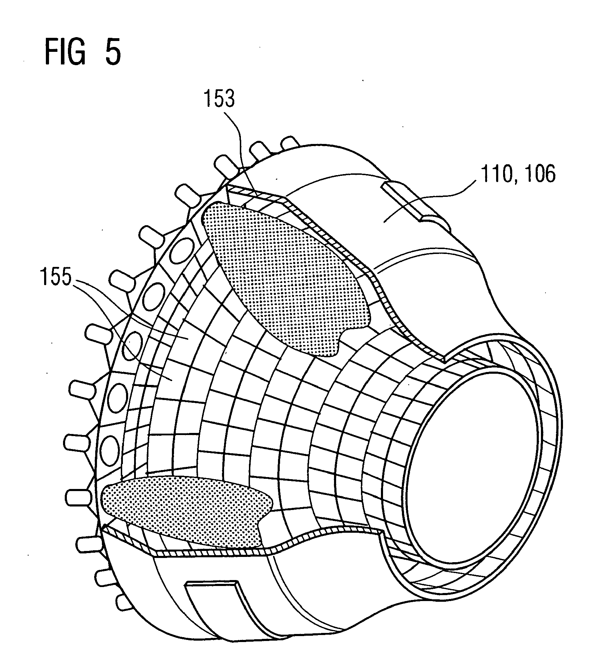

Figur 1 zeigt ein erfindungsgemäßes Schichtsystem 1.
Das Schichtsystem 1 weist ein metallisches Substrat 4 auf. Das metallische Substrat 4 ist, insbesondere bei Turbinenschaufeln 120, 130 (Fig. 3, 4), Brennkammerelementen 155 (Fig. 5) oder weiteren Bauteilen 138 für eine Gasturbine 100 (Fig. 3), eine nickel- oder kobaltbasierte Superlegierung. Vorzugsweise ist eine keramische Schicht 10 als äußerste Schicht 10 vorhanden, die zur Wärmedämmung dient und der hei-βem Medium, vorzugsweise in einer Turbine, direkt ausgesetzt ist.
Zwischen äußerster keramischer Schicht 10 und Substrat 4 ist erfindungsgemäß eine zumindest zweilagige Anbindungsschicht 9 vorhanden, die eine innere metallische Anbindungsschicht 7 mit der Temperatur DBTT1 und eine äußerste metallische Anbindungsschicht 8 mit der Temperatur DBTT2 aufweist, die erfindungsgemäß unterschiedliche Temperaturen für den Übergang von sprödem oder duktilem Verhalten besitzen (DBTT = Ductil brittle transition temperature).

Die Anbindungsschicht 7, 8, 9 dient auch als Korrosionsschutzschicht.
Daher soll die optimale Anbindungsschicht 9 gute Korrosionseigenschaften sowie auch gute mechanische Eigenschaften aufweisen.

Gute mechanische Eigenschaften sind: hohe Duktilität bei dem Einsatz bei hohen Temperaturen und/oder eine geringe Anfälligkeit gegen Rissinitiierung und/oder einen hohen Widerstand gegen Risswachstum (Risswiderstand).
Gute Korrosionseigenschaften bedeutet geringe Wachstumsraten der schützenden Oxidschicht, kaum oder kein Abplatzen der Oxidschicht.

Oft ist es so, dass ein Material für eine Anbindungsschicht mit guten Korrosionseigenschaften jedoch schlechtere mechanische Eigenschaften im Vergleich zu den anderen Materialien aufweist; und dass es hingegen Materialien gibt, die gute mechanische Eigenschaften, jedoch im Vergleich zu anderen Materialien schlechtere Korrosionseigenschaften aufweisen.
Um die Vorteile von verschiedenen Materialien auszunutzen wird daher erfindungsgemäß eine zweilagige metallische Anbindungsschicht 7, 8 vorgeschlagen.

Je nach Anwendung kann die Temperatur DBTT1 kleiner als die Temperatur DBTT2 sein.
Die innere Anbindungsschicht 7 weist im Einsatz geringere Temperaturen auf, da sie im Vergleich zu der äußeren metallischen Anbindungsschicht 8 weiter entfernt ist von der heißen Seite und einen geringeren Wärmeeintrag erfährt.
Daher weist die innere Anbindungsschicht 7 vorteilhafterweise die kleinere DBTT auf und die äußere Anbindungsschicht 8 die größere DBTT, also DBTT2 > DBTT1, sodass gewährleistet ist, dass bei einer Temperaturabsenkung die Temperaturen DBTT über den Temperaturen der dazugehörigen Schichten 7, 8 liegen und diese duktil bleiben (Fig. 2).

Figur 2 zeigt auf der linken Seite nur schematisch und nur beispielhaft Temperaturen, die an den Schichten 7, 8 anliegen.
Die äußere Anbindungsschicht 8 weist auf ihrer Oberfläche 11 beispielhaft eine Temperatur von 800°C auf und an der Grenzfläche zur unteren metallischen Anbindungsschicht 7 eine Temperatur von 750°C. Die Temperatur DBTT2 liegt bei 700°C für die Zusammensetzung dieser Anbindungsschicht 8.
An der Grenzfläche zum Substrat 4 weist die untere Anbindungsschicht 7 eine Temperatur von 700°C auf, wohingegen die Temperatur DBTT1 der Anbindungsschicht 7 bei 650°C liegt.
Für beide Anbindungsschichten 7, 8 gilt, dass die Temperaturen DBTT1, DBTT 2 im Einsatz unter den Temperaturen liegen, die in der Schicht 9 vorhanden sind, sodass beide Schichten 7, 8sich im duktilen Bereich befinden.

Bei einer Temperaturabsenkung (T↓, rechte Seite von Fig.2) sinkt beispielsweise die Temperatur an der äußeren Oberfläche der Anbindungsschicht 8 auf 750°C ab. Die Temperatur der Grenzfläche zwischen der äußeren Anbindungsschicht 8 und der inneren Anbindungsschicht 7 liegt dementsprechend beispielsweise bei 700°C, wohingegen an der Grenzfläche Substrat 4 innere Anbindungsschicht 7 die Temperatur ebenfalls beispielsweise um 50°C auf 650°C abgesunken ist.
Auch bei einer Temperaturabsenkung liegen die Temperaturen der Schichten 7, 8 über den Temperaturen DBTT1, DBTT2, sodass sich die metallischen Anbindungsschichten 7, 8 im duktilen Bereich befinden.
Wäre hingegen für die Zusammensetzung der Schicht 9 nur das Material für die äußere Anbindungsschicht 8 genommen worden, so wäre bei einer Temperaturabsenkung (Fig. 2 rechts) die Temperatur in einer solchen Schicht unter die Temperatur DBTT gefallen, so dass die Schicht bzw. ein Schichtbereich sich teilweise im spröden Zustand befunden hätte. Dies ist jedoch nicht erwünscht.
Die Figur 2 zeigt also die Vorteile, die sich aufgrund der erfindungsgemäßen Auswahl der Anbindungsschichten 7, 8 sich ergeben.

Ebenso ist es möglich, dass die Temperatur DBTT1 größer ist als die Temperatur DBTT2.

Eine weitere Möglichkeit, insbesondere wenn die Temperaturen DBTT1, DBTT2 kleiner sind als die Temperaturen, die im Einsatz des Bauteils an den Anbindungsschichten 7, 8 anliegen, für die Auswahl der verschiedenen metallischen Anbindungsschichten 7, 8 besteht darin, ein Material für die äußerste metallische Anbindungsschicht 8 so auszuwählen, dass es die besseren Korrosionseigenschaften aufweist, da es dem korrosiven Medium direkt ausgesetzt ist. Um zu verhindern, dass ein eventueller Riss, der sich in der äußeren Anbindungsschicht 8 gebildet hat, sich weiter durch die innere metallische Anbindungsschicht 7 in dem Schichtsystem aufbreitet, insbesondere bis zum Substrat 4 gelangt, ist unter der äußersten metallischen Anbindungsschicht 8 eine innere metallische Anbindungsschicht 7 vorhanden, die bessere mechanische Eigenschaften mit höherem Widerstand gegen Risswachstum, aber schlechtere korrosive Eigenschaften gegenüber der äußersten metallischen Anbindungsschicht 8 aufweisen, da sie 7 dem korrosiven Medium nicht direkt ausgesetzt ist.

Eine weitere Möglichkeit bezüglich der Auswahl der zwei metallischen Anbindungsschichten 7, 8 besteht darin, dass als äußerste metallische Anbindungsschicht 8 das Material verwendet wird, das im duktilen Zustand gute mechanische Eigenschaften aufweist. So werden auf der Oberfläche 11 keine oder kaum Risse initiiert. Auch können die Risse kaum oder schlecht weiter wachsen, da dieses Material einen hohen Widerstand gegen Risswachstum aufweist. Unter dieser äußersten Schicht 8 (mit den guten mechanischen Eigenschaften) ist eine innere metallische Anbindungsschicht 7 vorhanden, die gegenüber der äußersten metallischen Anbindungsschicht 8 bessere Korrosionseigenschaften aufweist und das Substrat 4 vor Korrosion und Oxidation schützen muss, damit es mehrmals verwendet werden kann.

Die erste und/oder zweite Anbindungsschicht 7, 8 besteht vorzugsweise aus einer Legierung des Typs MCrAlX (X = Y, Hf, Si, Ca, ...).
Insbesondere liegt der Unterschied in den Temperaturen für den Unterschied |DBTT1 - DBTT2| bei 50°C bis 200°C oder 50°C bis 100°C.
Ebenso vorteilhaft sind Unterschiede in den Temperaturen für |DBTT1 - DBTT2| die zwischen 100°C und 150°C oder zwischen 150°C und 200°C liegen.

Zwei vorteilhafte Zusammensetzungen für die innere oder die äußerste Anbindungsschicht 7, 8 sind:

| | |
|---|---|
| 20%wt - 22wt% | Chrom, |
| 11wt% - 13wt% | Kobalt, |
| 10,5wt% - 11,5wt% | Aluminium, |
| 0,3wt% - 0,5wt% | Yttrium, |
| 1,5wt% 2,5wt% | Rhenium, |
| sowie Rest | Nickel, |

oder

| | |
|---|---|
| 16wt% - 18wt% | Chrom, |
| 24wt% - 26wt% | Kobalt |
| 9,5wt% - 11wt% | Aluminium, |
| 0,3wt% - 0,5wt% | Yttrium, |
| 1,0wt% - 1,8wt% | Rhenium, |
| sowie Rest | Nickel. |

Je nach Anforderung kann die eine oder andere Zusammensetzung für die äußerste Anbindungsschicht 8 verwendet werden, wobei die andere genannte Zusammensetzung die innere Schicht 7 darstellt.
Weitere Kombinationen einer dieser zwei Zusammensetzungen mit anderen MCrAlX-Legierungen sind denkbar.

Die keramische Wärmedämmschicht 10 ist beispielsweise eine Zirkonoxidschicht, die beispielsweise durch Yttrium oder Cer stabilisiert ist. Weitere Materialien für die Wärmedämmschicht 10 sind Gadoliniumzirkonat Gd₂Zr₂O₇ oder Gadoliniumhafnat Gd₂Hf₂O₇ oder auch eine zweischichtige Struktur aus stabilisiertem Zirkonoxid mit einer äußersten Lage aus Gadoliniumzirkonat oder Gadoliniumhafnat.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 erfindungsgemäße Anbindungsschichten 7, 8 aufweisen. Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.
Diese Schutzschichten können ähnlich der Turbinenschaufeln 120, 130 sein, also die erfindungsgemäßen Anbindungsschichten 7, 8 aufweisen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem (1)
aufweisend
ein Substrat (4),
eine zweilagige metallische Anbindungsschicht (7, 8, 9) auf dem Substrat (4),
wobei das Material einer inneren metallischen Anbindungsschicht (7) bei einer Temperatur DBTT1 und
eine darauf befindliche äußere metallische Anbindungsschicht (8) bei einer Temperatur DBTT2
den Übergang vom Sprödverhalten zum duktilen Verhalten in den mechanischen Eigenschaften aufweisen,
und insbesondere einer äußersten keramischen Wärmedämmschicht (10) auf der metallischen Anbindungsschicht (8, 9) und wobei die Temperatur DBTT1 verschieden ist von der Temperatur DBTT2.

2. Schichtsystem nach Anspruch 1,
dessen Temperatur DBTT1 größer ist als die Temperatur DBTT2.

3. Schichtsystem nach Anspruch 1,
dessen Temperatur DBTT1 kleiner ist als die Temperatur DBTT2.

4. Schichtsystem nach Anspruch 1, 2 oder 3,
dessen äußere metallische Anbindungsschicht (8) gegenüber der inneren metallischen Anbindungsschicht (7) zumindest eine bessere mechanische Eigenschaft aufweist.

5. Schichtsystem nach Anspruch 1, 2 oder 3,
dessen innere metallische Anbindungsschicht (7) gegenüber der äußeren metallischen Anbindungsschicht (8) zumindest eine bessere mechanische Eigenschaft aufweist.

6. Schichtsystem nach Anspruch 1, 2, 3, 4 oder 5,
dessen metallische Anbindungsschicht (7, 8),
insbesondere beide metallische Anbindungsschichten (7, 8), eine Legierung des Typs MCrAlX ist.

7. Schichtsystem nach Anspruch 1,
dessen keramische Schicht (10) eine teilstabilisierte Zirkonoxidschicht ist,
insbesondere eine Yttrium-stabilisierte Zirkonoxidschicht.

8. Schichtsystem nach Anspruch 1, 2, 3, 4, 5 oder 6,
dessen Unterschied zwischen DBTT1 und der DBTT2 bei 50°C bis 200°C liegt.

9. Schichtsystem nach Anspruch 8,
dessen Unterschied zwischen DBTT1 und der DBTT2 bei 50°C bis 100°C liegt.

10. Schichtsystem nach Anspruch 8,
dessen Unterschied zwischen DBTT1 und der DBTT2 bei 100°C bis 150°C liegt.

11. Schichtsystem nach Anspruch 8,
dessen Unterschied zwischen DBTT1 und der DBTT2 bei 150°C bis 200°C liegt.

12. Schichtsystem nach Anspruch 1,
bei dem das Substrat (4) nickelbasiert ist.

13. Schichtsystem nach Anspruch 1,
bei dem das Substrat (4) kobaltbasiert ist.
